# EUROPÄISCHE PATENTSCHRIFT

(11) **EP 4 065 387 B1**
(45) Veröffentlichungstag und Bekanntmachung des Hinweises auf die Patenterteilung: **20.12.2023**
(21) Anmeldenummer: 20792371.5
(22) Anmeldetag: 13.10.2020
(51) Int. Cl.: B60C 11/03, B60C 11/12

(54) **FAHRZEUGLUFTREIFEN**
PNEUMATIC TIRE
PNEUMATIQUE

(30) Priorität: 29.11.2019 DE 102019218601
(43) Veröffentlichungstag der Anmeldung: 05.10.2022
(73) Patentinhaber: Continental Reifen Deutschland GmbH, 30165 Hannover (DE)
(72) Erfinder: BEHR, Ulrich, 30165 Hannover (DE)
(74) Vertreter: Continental Corporation
(86) Internationale Anmeldenummer: PCT/EP2020/078746
(87) Internationale Veröffentlichungsnummer: WO 2021/104738

(56) Entgegenhaltungen:
- EP-A1- 2 450 200
- EP-A1- 2 450 201
- EP-A1- 3 521 064
- EP-B1- 2 450 201

## Beschreibung

Die Erfindung einen Fahrzeugluftreifen mit einem profilierten Laufstreifen mit Profilelementen, wie Profilblöcken oder Profilrippen, in welchen Einschnitte mit einer Breite von 0,4 mm bis 1,0 mm jeweils eine Einschnittgruppe bilden und an einer Kreuzungsstelle ineinander einmünden, wobei an die Einschnitte in einer insbesondere konstanten Tiefe von 50% bis 80% der Profiltiefe des Reifens zylinderförmige oder rohrabschnittsförmige Hohlräume anschließen.

Ein derartiger Fahrzeugluftreifen ist aus der DE 10 2013 111 197 A1 bekannt. Dieser Reifen ist mit einem Laufstreifen versehen, welcher zumindest eine Profilrippe aufweist, in welcher in Umfangsrichtung aneinandergereiht eine Vielzahl von Einschnittgruppen aus kreuzschlitzförmig ausgebildeten Einschnitten vorgesehen ist. Zwei dieser Einschnitte verlaufen in Umfangsrichtung fluchtend zueinander und gehen im Inneren der Profilrippe jeweils in einen sich in Umfangsrichtung erstreckenden Hohlraum über. Auf diese Weise sind in der Profilrippe Helmholtz-Resonatoren ausgebildet. Die Formelemente, die während der Vulkanisation des Fahrzeugluftreifens in einer Vulkanisationsform derartige Einschnitte mit Hohlräumen ausbilden, lassen sich durch ihre Kreuzform nach der Vulkanisation aus dem Gummimaterial des Laufstreifens gut ausformen. Bei dieser bekannten Ausführung ist die Schallabsorption hinsichtlich der Frequenzen eingeschränkt.

Ferner ist aus der EP 3 521 064 A1 ein Fahrzeugluftreifen mit einem Laufstreifen mit Profilrippen bekannt. Gemäß einem Ausführungsbeispiel sind in einer Profilrippe Einschnitte vorgesehen, welche eine Einschnittgruppe bilden, gemeinsam in einen in radialer Richtung verlaufenden rohrförmigen Kanal einmünden und ausgehend vom Kanal strahlenförmig auseinanderlaufen. Ferner münden die Einschnitte in radialer Richtung über ihre gesamte Erstreckung jeweils in einen in einer konstanten Tiefe verlaufenden weiteren rohrförmigen Kanal ein, welcher ebenfalls zum in den radialer Richtung verlaufenden rohrförmigen Kanal verläuft. Der Reifen soll eine gute Nässe- und Eisperformance aufweisen.

Aus der EP 2 450 200 A1 ist ein Fahrzeugluftreifen mit einem Laufstreifen mit Profilelementen bekannt, in welchen zumindest jeweils drei Einschnitte eine Einschnittgruppe bilden, wobei die Einschnitte innerhalb des jeweiligen Profilelementes enden, an einer Kreuzungsstelle ineinander einmünden und sich über ihren in radialer Richtung vorliegenden Tiefenverlauf spiralförmig verdrehen. Die Einschnitte sollen unter anderem für die Bremseigenschaften auf Eis günstig sein.

Weiter ist aus der EP 2 450 201 A1 ein Fahrzeugluftreifen mit einem Laufstreifen Profilelementen bekannt, in welchen zumindest jeweils drei Einschnitte eine Einschnittgruppe bilden, wobei die Einschnitte innerhalb des jeweiligen Profilelementes enden, an einer Kreuzungsstelle ineinander einmünden und jeweils über einen lokalen in radialer Richtung verlaufenden Kanal verbreitert sind. Der Reifen soll gute Bremseigenschaften auf Eis aufweisen.

Der Erfindung liegt die Aufgabe zugrunde, bei einem Fahrzeugluftreifen eingangs genannter Art die von Einschnitten und Hohlräumen gebildeten Helmholtz-Resonatoren derart auszubilden, dass ein breiteres Band an störenden Frequenzen absorbiert werden kann, wobei eine beschädigungsfreie Entformung der die Einschnitte und Hohlräume im Gummimaterial ausbildenden Formelemente weiterhin gewährleistet sein soll. Darüber hinaus sollen die derart gebildeten Helmholtz-Resonatoren die Stabilität der Profilelemente nicht beeinträchtigen.

Gelöst wird die gestellte Aufgabe erfindungsgemäß dadurch, dass die Einschnittgruppe aus drei Einschnitten besteht, welche von ihrer Kreuzungsstelle ausgehend strahlenförmig auseinanderlaufen und an welche im Profilelementinneren jeweils ein Hohlraum anschließt, wobei sämtliche Hohlräume an der Kreuzungsstelle ineinander einmünden, wobei entweder sämtliche Einschnitte der Einschnittgruppe innerhalb des Profilelementes verlaufen und enden oder
wobei zumindest ein Einschnitt, höchstens zwei Einschnitte, einer Einschnittgruppe bis zu einer das Profilelement begrenzenden Rille verläuft bzw. verlaufen, wobei der zu diesem Einschnitt gehörende Hohlraum entweder in die Rille einmündet oder innerhalb des Profilelementes endet.

Gemäß der Erfindung bilden daher drei Einschnitte gemeinsam mit Hohlräumen einen Helmholtz-Resonator mit einer Kavität aus drei Kammern, die miteinander in Verbindung sind. Die derart gebildete größere Kavität erlaubt gegenüber der bekannten Ausführung eine wesentlich bessere Einstellung der zu absorbierenden, störenden Frequenzen. Darüber hinaus hat die strahlenförmige Anordnung der Einschnitte keine oder kaum Auswirkungen auf die Stabilität der Profilelemente. Die die Einschnitte und Hohlräume bei der Vulkanisation des Reifens ausformenden Formelemente lassen sich in Folge ihrer strahlenförmigen Ausgestaltung bei der Ausformung des Reifens aus der Vulkanisationsform unter Öffnen der Einschnitte leicht entfernen.

Dabei können die Einschnitte einer Einschnittgruppe gleich lang oder auch unterschiedlich lang ausgeführt sein. Die Länge der Hohlräume kann, muss jedoch nicht an die Länge der Einschnitte entsprechend angepasst sein. Die diesbezüglich möglichen Ausgestaltungen erlauben vorteilhafterweise eine gute Anpassung an die zu absorbierenden Frequenzen.

Hohlräume, die wie ein Einschnitt in eine Umfangs- oder Querrille einmünden, können zusätzlich einen Beitrag zur Entwässerung des Laufstreifens leisten.

Bei einer weiteren bevorzugten Ausführung ist an der Kreuzungsstelle der Einschnitte an der Außenfläche des Profilelementes eine insgesamt runde Vertiefung ausgebildet, die eine größte Tiefe von 1,5 mm bis 2,5 mm aufweist. Die Vertiefung sorgt für einen gleichmäßigen Abrieb des Laufstreifens im Bereich der Kreuzungsstellen, da ungünstige spitzwinkelige Ecken vermieden sind. Dabei sind die Vertiefungen in Draufsicht insbesondere kreisförmig und weisen einen Durchmesser von 2,0 mm bis 4,0 mm auf. Besonders wirkungsvoll sind ferner zylinder- oder rohrabschnittförmige Hohlräume mit einem größten Durchmesser, welcher das 1,5- bis 2,5- Fache der Breite der Einschnitte beträgt.

Für die Stabilität der Profilelemente mit zunehmendem Laufstreifenabrieb ist es ferner von Vorteil, wenn die Einschnitte an ihren von der Kreuzungsstelle abgewandten Endbereichen in radialer Richtung von einer Endflanke begrenzt sind, die zur radialen Richtung unter einem Winkel von 25° bis 35° verläuft, derart, dass die Erstreckung jedes Einschnittes ausgehend von der Außenfläche des Profilelementes über seinen Verlauf in radialer Richtung zunehmend kleiner wird.

Die Einschnitte selbst haben auch eine Wirkung auf die Traktions- und die Bremsperformance des Reifens. Bei diesbezüglich bevorzugten und vorteilhaften Ausgestaltungen verlaufen die Einschnitte und ihrer Hohlräume in Draufsicht gerade oder gebogen, insbesondere flach V-förmig gebogen.

Bei einer weiteren diesbezüglich vorteilhaften Maßnahme ist vorgesehen, dass die Einschnitte einer Einschnittgruppe an der Kreuzungsstelle miteinander einen Winkel einschließen, welcher 120° +/- 30° beträgt.

Für eine optimale Wirkung der Hohlräume ist es von Vorteil, wenn innerhalb des Profilelementes endende Hohlräume eine Länge von 10,0 mm bis 30,0 mm aufweisen.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine Schrägansicht eines Profilblockes eines Laufstreifens eines Fahrzeugluftreifens mit einer ersten Ausführungsvariante der Erfindung,
Fig. 2 eine Draufsicht auf den Profilblock aus Fig. 1,
Fig. 3 eine Draufsicht auf einen Umfangsabschnitt einer Profilrippe mit einer zweiten Ausführungsvariante der Erfindung,
Fig. 4 eine Schrägansicht eines Ausschnittes der Profilrippe aus Fig.3 und
Fig. 5 eine Draufsicht auf einen Umfangsabschnitt einer Profilrippe mit einer dritten Ausführungsvariante der Erfindung.

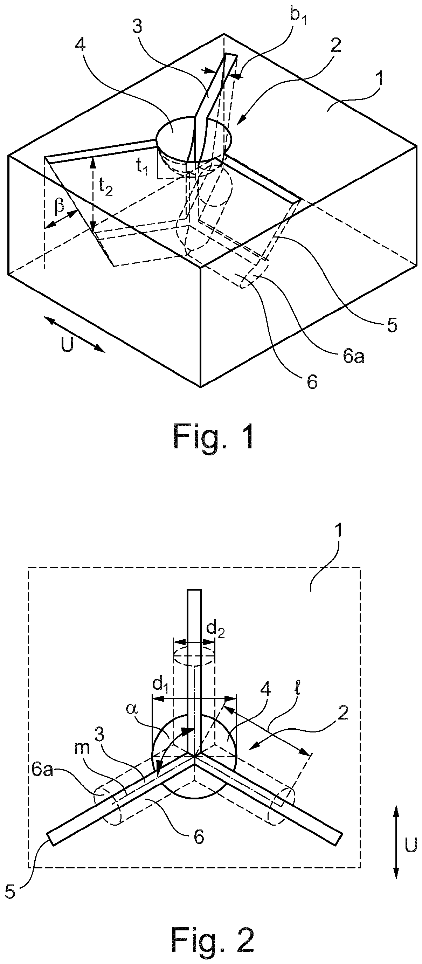

Fig. 1 und Fig. 2 zeigen Ansichten eines Profilblockes 1 eines Laufstreifens eines Fahrzeugluftreifens radialer Bauart, insbesondere für einen Personenkraftwagen. Der lediglich schematisch und daher quaderförmig dargestellte Profilblock 1 ist Bestandteil einer in Umfangsrichtung des Laufstreifens umlaufenden, nicht dargestellten Blockreihe, deren Profilblöcke voneinander durch Querrillen getrennt sind. Blockreihen, die im mittleren Bereich des Laufstreifens verlaufen, weisen üblicherweise an beiden Seiten in Umfangsrichtung umlaufende Umfangsrillen auf, schulterseitig verlaufende Blockreihen sind nur laufstreifeninnenseitig von einer in Umfangsrichtung umlaufenden Umfangsrille begrenzt. In Fig. 1 und Fig. 2 ist die Umfangsrichtung des Laufstreifens durch den Doppelpfeil U angedeutet.

Im Profilblock 1 ist eine Einschnittgruppe 2 aus drei Einschnitten 3 ausgebildet, die ausgehend von einem gemeinsamen zentralen Bereich strahlenförmig verlaufen und im Profilblock 1 enden, daher in keine Rille münden. Die Mittellinien m (Fig. 2) der Einschnitte 3 schließen daher miteinander jeweils einen Winkel α ein, welcher im Beispiel 120° beträgt und um bis zu +/- 30° von 120° abweichen kann. Die Einschnitte 3 münden im zentralen Bereich, der ein Kreuzungsstelle bildet, über ihre radiale Erstreckung ineinander, wobei an der Außenfläche des Profilblockes 1 im Bereich der Kreuzungsstelle oberflächlich eine insgesamt runde Vertiefung 4 ausgebildet ist. Die Vertiefung 4 ist im Beispiel in Draufsicht kreisförmig, ansonsten kugelabschnittsförmig und dabei höchstens halbkugelförmig. Der Durchmesser d₁ der Vertiefung 4 an der Außenfläche des Profilblockes 1 beträgt 2,0 mm bis 4,0 mm, ihre größte Tiefe t₁ 1,5 mm bis 2,5 mm. Bei weiteren, nicht gezeigten Ausgestaltungen kann die Vertiefung 4 in Draufsicht elliptisch bzw. oval ausgeführt sein.

Die an der Kreuzungsstelle ineinander mündenden Einschnitte 3 verlaufen bei dem in Fig. 1 und 2 gezeigten Beispiel gerade und weisen eine konstante Breite b₁ auf, die 0,4 mm bis 1,0 mm beträgt. Die Einschnitte 3 reichen in radialer Richtung bis in eine insbesondere konstante Tiefe tz, die 50 % bis 90 % der vorgesehenen Profiltiefe - dies ist üblicherweise die Tiefe der breiten Umfangsrillen im Reifen - beträgt. Jeweils eine schmale Endflanke 5 verläuft an den geschlossenen Enden der Einschnitte 3. Die Endflanken 5 verbinden daher die Einschnittwände und verlaufen zur radialen Richtung unter einem spitzen Winkel β von 25° bis 35°, insbesondere in der Größenordnung von 30°, sodass die Erstreckung jedes Einschnittes 3, parallel zur Außenfläche des Profilblockes 1, ausgehend von der Außenfläche des Profilblockes 1 über seinen Verlauf in radialer Richtung zunehmend kleiner wird. Jeder Einschnitt 3 mündet in einen zylinderförmig ausgebildeten Hohlraum 6, welcher sich über die Länge des Einschnittes 3 in der Tiefe t₂ erstreckt und einen insbesondere konstanten Durchmesser d₂ aufweist, welcher das 1,5- bis 2,5-Fache der Breite b₁ des Einschnittes 3 beträgt. Nachdem jeder Einschnitt 3 mit einem Hohlraum 6 versehen ist, münden sämtlich Hohlräume 6 an der Kreuzungsstelle innerhalb des Profilblockes 1 ineinander. In Verlängerung der Endflanken 5 weisen die Hohlräume 6 Endflächen 6a auf, welche mit der radialen Richtung analog zu den Endflanken 5 den Winkel β einschließen. Die Einschnitte 3 und die Hohlräume 6 sind bezüglich ihrer Längserstreckung derart aufeinander angestimmt, dass sich die Hohlräume 6 ausgehend vom Mittelpunkt der Kreuzungsstelle über eine Länge l von 10,0 mm bis 30,0 mm erstrecken.

Die Einschnitte 3 bilden gemeinsam mit den Hohlräumen 6 einen aus drei Kammern bestehenden Helmholtz-Resonator. Die Dimensionen der Einschnitte 3 und der Hohlräume 6 werden derart aufeinander abgestimmt, dass der Helmholtz-Resonator als Resonanzabsorber gezielt störende Frequenzen absorbiert.

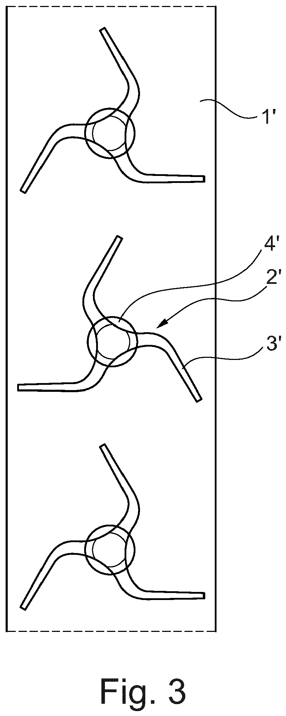

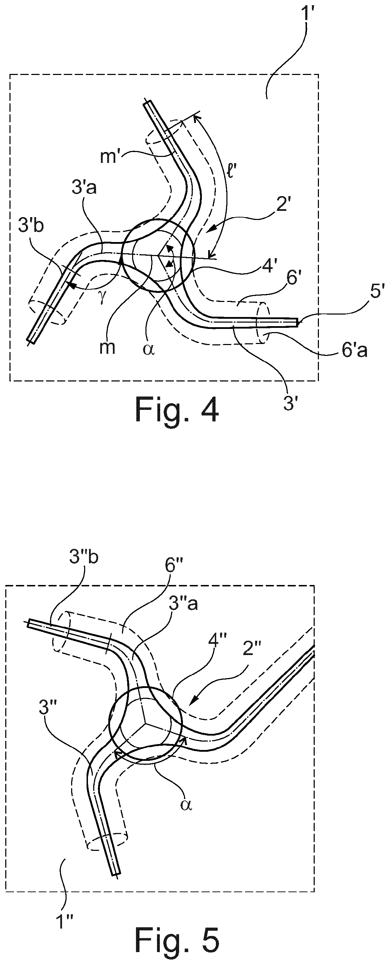

Fig. 3 und Fig. 4 zeigen eine weitere Ausführungsform der Erfindung, Fig. 3 anhand eines Umfangsabschnitt einer Profilrippe 1', in welcher eine Vielzahl von Einschnittgruppen 2` in Umfangsrichtung aufeinanderfolgend ausgebildet ist, Fig. 4 anhand einer Draufsicht eines Ausschnittes der Profilrippe 1' mit einer Einschnittgruppe 2`. Die Einschnittgruppe 2' unterscheidet sich von jener der ersten Ausführungsform durch den Verlauf der die Einschnittgruppe 2' bildenden Einschnitte 3', welche in Draufsicht nicht gerade sondern von der zentralen Vertiefung 4` und der Kreuzungsstelle ausgehend in einem flach V-förmigen Bogen verlaufen. Die Einschnitte 3' setzen sich daher in Draufsicht aus zwei Einschnittabschnitten 3'a, 3'b zusammen, wobei die Einschnittabschnitte 3'a, welche an die Kreuzungsstelle anschließen, zueinander unter dem erwähnten Winkel α verlaufen. Die Einschnittabschnitte 3'a gehen über Rundungen in die Einschnittabschnitte 3'b über, sodass die beiden Einschnittabschnitte 3'a, 3'b miteinander einen Winkel γ einschließen, welcher 90° bis 170°, insbesondere 130° bis 160°, beträgt. Hohlräume 6' schließen auf analoge Weise wie die Hohlräume 6 der ersten Ausführungsform in der Tiefe t₂ an jeden Einschnitt 3' an und verlaufen dabei ebenfalls in Bogenform, bedingt durch die Neigung der Endflanken 5' der Einschnitte 3' relativ zur radialen Richtung - Winkel β aus Fig. 1 von insbesondere 30° - über die kleinere Erstreckung der Einschnitte 3' in der Tiefe t₂. Auch bei dieser Ausführungsform verlaufen die Endflächen 6'a der Hohlräume 6' in Fortsetzung der Endflanken 5'. Bei dieser Ausführung ist die Kreuzungsstelle durch gerundete Übergänge zwischen den einmündenden Einschnitten 3' lochartig gestaltet. Die Hohlräume 6' weisen entlang der Mittellinien m' - zwischen dem Mittelpunkt der Vertiefung 4` und ihren Enden - jeweils eine Länge l' von 10,0 mm bis 30, 0 mm auf.

Die bevorzugte Anordnung der Einschnittgruppen 2, 2` innerhalb der Profilblöcke 1 einer Profilblockreihe oder innerhalb einer Profilrippe 1' ist derart, dass sich einer der Einschnitte 3, 3' in Umfangsrichtung bzw. im Wesentlichen in Umfangsrichtung erstreckt.

Fig. 5 zeigt eine Ausführungsvariante, bei welcher einer der drei, von einer gemeinsamen Kreuzungsstelle mit einer Vertiefung 4" ausgehenden Einschnitte 3" einer Einschnittgruppe 2" bis zum seitlichen Rand der Profilrippe 1" reicht. Die Einschnitte 3" setzen sich anlog zu den Einschnitten 3' gemäß Fig. 4 in Draufsicht aus zwei Einschnittabschnitten 3"a, 3"b zusammen, wobei die Einschnittabschnitte 3"a, welche an die Kreuzungsstelle anschließen, zueinander unter dem erwähnten Winkel α verlaufen. Der bis zum seitlichen Rand der Profilrippe 1" verlaufende Einschnitt 3" weist einen längeren Einschnittabschnitt 3"b auf als die beiden weiteren Einschnitte 3". Bei den kürzeren Einschnitten 3" verlaufen die Hohlräume 6" anlog zu Fig. 4, bei dem bis zum seitlichen Rand der Profilrippe 1" verlaufende Einschnitt 3" kann der Hohlraum 6" auch in die an die Profilrippe 1" seitlich anschließende, nicht dargestellte Umfangsrille einmünden.

### Bezugsziffernliste

- 1: Profilblock
- 1', 1": Profilrippe
- 2, 2', 2": Einschnittgruppe
- 3, 3', 3": Einschnitt
- 3'a, 3'b: Einschnittabschnitt
- 3"a, 3"b: Einschnittabschnitt
- 4, 4', 4": Vertiefung
- 5, 5': Endflanke
- 6, 6', 6": Hohlraum
- 6a, 6'a: Endfläche
- α, β, γ: Winkel
- b₁: Breite
- t₁, t₂: Tiefe
- d₁, d₂: Durchmesser
- l, l': Länge
- m, m': Mittellinie
- U: Umfangsrichtung

## Patentansprüche

1. Fahrzeugluftreifen mit einem profilierten Laufstreifen mit Profilelementen (1, 1', 1"), wie Profilblöcken (1) oder Profilrippen (1', 1"), in welchen Einschnitte (3, 3', 3") mit einer Breite (b₁) von 0,4 mm bis 1,0 mm jeweils eine Einschnittgruppe (2, 2', 2") bilden und an einer Kreuzungsstelle ineinander einmünden, wobei an die Einschnitte (3, 3', 3") in einer insbesondere konstanten Tiefe (t₂) von 50% bis 80% der Profiltiefe des Reifens zylinderförmige oder rohrabschnittsförmige Hohlräume (6, 6', 6") anschließen, **dadurch gekennzeichnet,**
**dass** die Einschnittgruppe (2, 2', 2") aus drei Einschnitten (3, 3', 3") besteht, welche von ihrer Kreuzungsstelle ausgehend strahlenförmig auseinanderlaufen und an welche im Profilelementinneren jeweils ein Hohlraum (6, 6', 6") anschließt, wobei sämtliche Hohlräume (6, 6', 6") an der Kreuzungsstelle ineinander einmünden,
wobei entweder sämtliche Einschnitte (3, 3') der Einschnittgruppe (2, 2') innerhalb des Profilelementes (1, 1") verlaufen und enden oder
wobei zumindest ein Einschnitt (3"), höchstens zwei Einschnitte, einer Einschnittgruppe (2") bis zu einer das Profilelement (1") begrenzenden Rille verläuft bzw. verlaufen, wobei der zu diesem Einschnitt (3") gehörende Hohlraum (6") entweder in die Rille einmündet oder innerhalb des Profilelementes (1") endet.

2. Fahrzeugluftreifen nach Anspruch 1, **dadurch gekennzeichnet, dass** an der Kreuzungsstelle der Einschnitte (3, 3', 3") an der Außenfläche des Profilelementes (1, 1`, 1") eine insgesamt runde Vertiefung (4, 4', 4") ausgebildet ist, die eine größte Tiefe (t₁) von 1,5 mm bis 2,5 mm aufweist.

3. Fahrzeugluftreifen nach Anspruch 2, **dadurch gekennzeichnet, dass** die Vertiefung (4, 4', 4") in Draufsicht kreisförmig ist und einen Durchmesser (d₁) von 2,0 mm bis 4,0 mm aufweist.

4. Fahrzeugluftreifen nach einem der Ansprüche 1 bis 3, **dadurch gekennzeichnet, dass** die zylinder- oder rohrabschnittsförmigen Hohlräume (6, 6', 6") einen größten Durchmesser aufweisen, welcher das 1,5- bis 2,5-Fache der Breite (b₁) der Einschnitte (3) beträgt.

5. Fahrzeugluftreifen nach einem der Ansprüche 1 bis 4, **dadurch gekennzeichnet, dass** die Einschnitte (3, 3', 3") an ihren der Kreuzungsstelle abgewandten Endbereichen in radialer Richtung von einer Endflanke (5, 5') begrenzt sind, die zur radialen Richtung unter einem Winkel (β) von 25° bis 35° verläuft, derart, dass die Erstreckung jedes Einschnitt (3, 3', 3") ausgehend von der Außenfläche des Profilelementes (1, 1 `, 1 ") über seinen Verlauf in radialer Richtung zunehmend kleiner wird.

6. Fahrzeugluftreifen nach einem der Ansprüche 1 bis 5, **dadurch gekennzeichnet, dass** die Einschnitte (3) einer Einschnittgruppe (2) und ihre Hohlräume (6) in Draufsicht gerade verlaufen.

7. Fahrzeugluftreifen nach einem der Ansprüche 1 bis 6, **dadurch gekennzeichnet, dass** die Einschnitte (3', 3") einer Einschnittgruppe (2', 2") und ihre Hohlräume (6', 6") in Draufsicht gebogen, insbesondere flach V-förmig gebogen, verlaufen.

8. Fahrzeugluftreifen nach einem der Ansprüche 1 bis 7, **dadurch gekennzeichnet, dass** die Einschnitte (3, 3', 3") einer Einschnittgruppe (2, 2', 2") an der Kreuzungsstelle miteinander einen Winkel (α) einschließen, welcher 120° ± 30° beträgt.

9. Fahrzeugluftreifen nach einem der Ansprüche 1 bis 8, **dadurch gekennzeichnet, dass** innerhalb des Profilelementes (1, 1', 1") endende Hohlräume (6, 6', 6") eine Länge (l, l') von 10,0 mm bis 30,0 mm aufweisen.

## Claims

1. Pneumatic vehicle tyre having a profiled tread with profile elements (1, 1', 1"), such as profile blocks (1) or profile ribs (1', 1"), in which sipes (3, 3', 3") with a width (b₁) of 0.4 mm to 1.0 mm form in each case one sipe group (2, 2', 2") and open out into one another at a crossing point, wherein the sipes (3, 3', 3") are adjoined by cylindrical or tube-segment-shaped cavities (6, 6', 6") at a particularly constant depth (t₂) of 50% to 80% of the profile depth of the tyre,
**characterized**
**in that** the sipe group (2, 2', 2") consists of three sipes (3, 3', 3") which extend radially apart from their crossing point and which are adjoined in the profile-element interior by in each case one cavity (6, 6', 6"), wherein all the cavities (6, 6', 6") open out into one another at the crossing point,
wherein either all the sipes (3, 3') of the sipe group (2, 2') extend and end within the profile element (1, 1'), or at least one sipe (3"), at most two sipes, of a sipe group (2") extends or extend as far as a groove which delimits the profile element (1"), wherein the cavity (6") belonging to this sipe (3") either opens out into the groove or ends within the profile element (1").

2. Pneumatic vehicle tyre according to Claim 1, **characterized in that** an altogether round depression (4, 4', 4") having a maximum depth (t₁) of 1.5 mm to 2.5 mm is formed at the crossing point of the sipes (3, 3', 3") in the outer surface of the profile element (1, 1', 1").

3. Pneumatic vehicle tyre according to Claim 2, **characterized in that** the depression (4, 4', 4"), in plan view, is circular and has a diameter (d₁) of 2.0 mm to 4.0 mm.

4. Pneumatic vehicle tyre according to one of Claims 1 to 3, **characterized in that** the cylindrical or tube-segment-shaped cavities (6, 6', 6") have a maximum diameter which is 1.5 to 2.5 times the width (b₁) of the sipes (3).

5. Pneumatic vehicle tyre according to one of Claims 1 to 4, **characterized in that**, at their end regions remote from the crossing point, the sipes (3, 3', 3") are delimited in a radial direction by an end flank (5, 5'), which extends at an angle (β) of 25° to 35° to the radial direction, in such a way that, proceeding from the outer surface of the profile element (1, 1', 1"), the extent of each sipe (3, 3', 3") becomes increasingly smaller over its profile in the radial direction.

6. Pneumatic vehicle tyre according to one of Claims 1 to 5, **characterized in that** the sipes (3) of a sipe group (2) and their cavities (6) extend in a straight manner in plan view.

7. Pneumatic vehicle tyre according to one of Claims 1 to 6, **characterized in that** the sipes (3', 3") of a sipe group (2', 2") and their cavities (6', 6") extend in a bent manner, in particular in a manner bent in the form of a shallow V, in plan view.

8. Pneumatic vehicle tyre according to one of Claims 1 to 7, **characterized in that**, at the crossing point, the sipes (3', 3', 3") of a sipe group (2', 2', 2") include an angle (α) of 120° ± 30° with one another.

9. Pneumatic vehicle tyre according to one of Claims 1 to 8, **characterized in that** cavities (6, 6', 6") ending within the profile element (1, 1', 1") have a length (l, l') of 10.0 mm to 30.0 mm.

## Revendications

1. Pneumatique de véhicule avec une bande de roulement profilée avec des éléments de profil (1, 1', 1"), tels que des blocs de profil (1) ou des nervures de profil (1', 1"), dans lesquels des entailles (3, 3', 3") d'une largeur (b₁) de 0,4 mm à 1,0 mm forment respectivement un groupe d'entailles (2, 2', 2") et débouchent les unes dans les autres au niveau d'un point d'intersection, des cavités (6, 6', 6") en forme de cylindre ou en forme de section tubulaire se raccordant aux entailles (3, 3', 3") à une profondeur (t₂) notamment constante de 50 % à 80 % de la profondeur de profil du pneu,
**caractérisé en ce que**
le groupe d'entailles (2, 2', 2") est constitué de trois entailles (3, 3', 3") qui s'écartent en forme de rayons à partir de leur point d'intersection et auxquelles se raccorde respectivement une cavité (6, 6', 6") dans l'espace intérieur de l'élément de profil, toutes les cavités (6, 6', 6") débouchant les unes dans les autres au niveau du point d'intersection,
soit toutes les entailles (3, 3') du groupe d'entailles (2, 2') s'étendant et se terminant à l'intérieur de l'élément de profil (1, 1"), soit au moins une entaille (3"), au plus deux entailles, d'un groupe d'entailles (2") s'étendant jusqu'à une rainure délimitant l'élément de profil (1"), la cavité (6") appartenant à cette entaille (3") soit débouchant dans la rainure, soit se terminant à l'intérieur de l'élément de profil (1").

2. Pneumatique de véhicule selon la revendication 1, **caractérisé en ce que**, au niveau du point d'intersection des entailles (3, 3', 3"), il est réalisé sur la surface extérieure de l'élément de profil (1, 1', 1") un renfoncement (4, 4', 4") globalement rond, qui présente une profondeur (t₁) maximale de 1,5 mm à 2,5 mm.

3. Pneumatique de véhicule selon la revendication 2, **caractérisé en ce que** le renfoncement (4, 4', 4") est circulaire en vue de dessus et présente un diamètre (d₁) de 2,0 mm à 4,0 mm.

4. Pneumatique de véhicule selon l'une quelconque des revendications 1 à 3, **caractérisé en ce que** les cavités (6, 6', 6") en forme de cylindre ou de section tubulaire présentent un diamètre maximal qui est de 1,5 à 2,5 fois la largeur (b₁) des entailles (3).

5. Pneumatique de véhicule selon l'une quelconque des revendications 1 à 4, **caractérisé en ce que** les entailles (3, 3', 3") sont délimitées dans la direction radiale, au niveau de leurs zones d'extrémité détournées du point d'intersection, par un flanc d'extrémité (5, 5') qui s'étend selon un angle (β) de 25° à 35° par rapport à la direction radiale, de telle sorte que l'extension de chaque entaille (3, 3', 3") à partir de la surface extérieure de l'élément de profil (1, 1', 1") devient de plus en plus petite sur son parcours dans la direction radiale.

6. Pneumatique de véhicule selon l'une quelconque des revendications 1 à 5, **caractérisé en ce que** les entailles (3) d'un groupe d'entailles (2) et leurs cavités (6) s'étendent en ligne droite en vue de dessus.

7. Pneumatique de véhicule selon l'une quelconque des revendications 1 à 6, **caractérisé en ce que** les entailles (3', 3") d'un groupe d'entailles (2', 2") et leurs cavités (6', 6") s'étendent de manière incurvée en vue de dessus, notamment de manière incurvée à plat en forme de V.

8. Pneumatique de véhicule selon l'une quelconque des revendications 1 à 7, **caractérisé en ce que** les entailles (3, 3', 3") d'un groupe d'entailles (2, 2', 2") forment entre elles, au niveau du point d'intersection, un angle (α) qui est de 120° ± 30°.

9. Pneumatique de véhicule selon l'une quelconque des revendications 1 à 8, **caractérisé en ce que** les cavités (6, 6', 6") se terminant à l'intérieur de l'élément de profil (1, 1', 1") présentent une longueur (1, 1') de 10,0 mm à 30,0 mm.
